Europäisches Patentamt

European Patent Office

Office européen des brevets

(11) Publication number: **0 448 747 A1**

# EUROPEAN PATENT APPLICATION

(21) Application number: 90105734.9

(51) Int. Cl.5: **C09D 5/44**

(22) Date of filing: **26.03.90**

(43) Date of publication of application:
**02.10.91 Bulletin 91/40**

(84) Designated Contracting States:
**BE DE ES FR GB IT NL SE**

(71) Applicant: **BASF Corporation**
**1419 Biddle Avenue**
**Wyandotte, Michigan 48192-3736(US)**

(72) Inventor: **Clark, Peter D.**
**25888 Rutledge Crossing**
**Farmington Hills, Michigan 48331(US)**
Inventor: **Panush, Sol**
**28670 Oak Crest Drive**
**Farmington Hills Michigan 48018(US)**
Inventor: **Wold, Gerald G.**
**3206 Old Orchard**
**Brighton, Michigan 48116(US)**
Inventor: **Sell, Burnell A.**
**540 Carlisle**
**Hutchinson, Minnesota(US)**

(74) Representative: **Baillie, Iain Cameron et al**
**c/o Ladas & Parry Isartorplatz 5**
**W-8000 München 2(DE)**

(54) Cathodic electrodepositable coatings containing hydrophobic dyes.

(57) Cathodic electrodepositable coatings, free of conventional pigmenting agents, aqueous coating baths, cathodic electrodeposition coating processes and coated articles. The coatings comprise cationic, electrodepositable resin compositions and cross-linking agents and contain hydrophobic dyes. The deposited, cured coatings have excellent gloss and flow.

Technical Field

The field of art to which this invention pertains is cathodic electrodepositable resin compositions and, more specifically, cathodic electrodepositable epoxy-amine resin adduct compositions and cathodic electrodepositable acrylic amine functional copolymer compositions containing hydrophobic dyes.

Background of the Invention

Cathodic electrodepositable resin compositions are well known in the coating arts. The use of these cathodic electrodepositable resin compositions in aqueous electrodeposition coating baths, as well is processes for coating objects and articles in these aqueous cathodic electrodeposition coating baths, are similarly well known in the art. Cathodic electrodepositable resin compositions are particularly useful as primers on metal surfaces to protect against corrosion.

The conventional cathodic electrodepositable aqueous resin compositions used are epoxy-amine resin adduct compositions and amine-functional acrylic copolymer compositions. The electrodepositable resin compositions are typically salted with an acid to form an aqueous principal emulsion This emulsion is combined with a cross-linking agent, either before or after salting, that is designed to cross-link or cure the resin composition under various curing conditions. The aqueous principal emulsion, containing the cross-linking agent, is typically mixed at the coating site with a pigment paste, water, organic coalescent solvents, and other conventional additives to form an aqueous electrodeposition coating bath. The bath is typically contained in an electrically insulated tank containing an anode. The tank is of a sufficient size to completely contain an immersed article during the coating process. An article which may be coated in an electrodeposition coating process typically comprises an electrically conductive material, such as carbon steel.

Once the coating bath is prepared and stabilized within the required coating parameters, the electrodeposition process can be initiated by connecting the conductive article to a direct current power supply so that the article acts as a cathode. Next, the article is immersed in the coating bath, and a flow of electricity is initiated across the object, thereby causing the electrodepositable resin composition and the cross-linking agent of the principal emulsion, as well as the pigment paste, to be deposited on the surfaces of the article. When a film or layer of coating of sufficient thickness has been deposited upon the surfaces of the article, the article is removed from the coating bath, optionally washed with distilled water, and then placed in a curing means wherein the deposited film is cured to a smooth, hard, durable, coating. Cathodic, electrodepositable, resin compositions, methods of manufacturing these cathodic electrodepositable resin compositions, aqueous electrodposition coating baths and processes for the deposition of these resin compositions from a coating bath onto a conductive article or object are disclosed in U.S. Patents No. 3,984,299, 3,468,779, 4,116,900, 4,093,594, 4,137,140, 4,104,147 4,255,478, 4,432,850, 4,419,467, 3,883,483 and 3,853,803.

These cathodic, electrodepositable resin compositions, when cured to hard, durable coatings, provide a metal substrate with superior corrosion protection. Cathodic electrodeposited coatings are typically used as primer coatings and subsequently overcoated with protective and decorative topcoat coating compositions. Typically, in the automotive industry, the topcoat coating compositions comprise inner pigmented base coats and outer, clear protective top coats. The top coats may also comprise pigmented coatings.

There is a constant search in this art for improved electrodeposition coating compositions, coating baths and methods of coating.

Presently, cathodic electrodeposition baths, and electrodeposited coatings contain organic and/or inorganic pigments. One purpose of the pigmentation is to hide the underlying substrate and permit visual detection of the deposited primer coating. This is necessary in order to facilitate the determination of process parameters such as film thickness. Pigmentation of the deposited electrocoat coating also facilitates any subsequent refinishing operations wherein an outer top coat may be sanded down to the underlying electrocoat primer. During the sanding operation it is important to detect and not disturb the underlying primer in order to protect the integrity of the primer coating.

In order to introduce pigment into a electrodeposition coating bath, it is necessary to grind dry pigment into a liquid grind resin composition. The grind resin composition is typically a specially designed and formulated cathodic, aqueous electrodepositable resin composition. The grinding process serves several functions which include reducing the particle size of the pigment and completely coating and dispersing the pigment particles in the grind resin media. The resulting pigment paste is then easily dispersed in an aqueous, cathodic electrodeposition coating bath. It is also believed that the grind resin functions to help to maintain the pigment in suspension in the aqueous coating bath. Typically, about 10 percent of the resin composition in a cathodic, aqueous electrodeposition coating bath will comprise the grind resin, while the remainder of the resin will comprise the principal resin plus cross-linking agent.

There are several disadvantages associated with the use of color pigments in aqueous, cathodic electrodeposition baths. It is known in the art that pigments contained in an aqueous, cathodic electrodeposition coating bath tend to settle out of the bath. It is believed that this tendency to settle is at least in part the result of the density differences between the pigments and water, the pigments being more dense then water. Pigments are maintained in a dispersed state in the coating bath through constant agitation of the coating bath. This is accomplished by a continuous loop pumping system so that the electrocoat bath is constantly pumped out of the bath tank and then discharged back into the bath tank. As previously mentioned, it is also believed that the grind resin assists in some manner to maintain the pigment in the dispersed state.

However, even with constant and intense agitation, and even though properly designed grind resin compositions are used, pigment does have a tendency to settle out of electrodeposition coating baths. The settling of pigment causes several problems. Pigment tends to accumulate at the bottom of tanks causing fouling of tanks and equipment, and resulting in shut-downs and process equipment failures. The settled pigments tend to cause dirt to accumulate in electrocoat coatings. The accumulation of dirt particles in electrocoat coatings adversely affects the coating appearance and integrity.

In addition, pigment which settles out is not recoverable, resulting in reduced paint utilization efficiency. The "settled-out" pigment must be disposed of as waste material.

Another disadvantage of using conventional pigments is that it is known that producing pigment pastes by the process of grinding dry pigment with a wet grind resin is extremely time and energy intensive. In addition, pigment pastes made from pigment and grind resin typically contain substantial quantities of volatile organic compounds. The addition of pigment paste to an aqueous, cathodic, electroposition ("E-Coat") coating bath increases the volatile organic content (VOC) of the bath. This increased VOC is disadvantageous with regard to conformance with federal, state and local pollution control and environmental regulations. Still another disadvantage of using pigments is that pigments reduce the flow of a coating. The flow is related to the smoothness of the cured coating. In order to improve the flow of pigmented electrocoat coatings, additional solvents must be added to the electrocoat bath, also resulting in increased VOC.

It has been disclosed in U.S. Patent No. 4,246,151 that dyes can be used in aqueous coating baths as additives, however this concept has not been shown to be feasible and has not been used.

U.S. Patent No. 4,655,787 discloses an electrodeposition coating process incorporating solvent dye into an electrophoretic resin on a metal surface. The patent discloses that attempts to use water insoluble dyes have not been successful in aqueous coating baths. The patent discloses a process wherein a deposited coating is dipped into a solvent medium comprising water miscible solvent, water, and a solvent dye.

What is needed in this art are aqueous cathodic, electrodepositable coatings, coating baths, and processes which produce colored, cured coatings but which are free of conventional color pigments which require pretreatment and admixture with pigment grind resins.

Disclosure of the Invention

Novel cathodic electrodepositable resinous coating compositions are disclosed. The use of the coating compositions in aqueous, cathodic electrodeposition coating baths surprisingly and unexpectedly results in colored, cured coatings without the need for conventional pigments in the coating compositions or in the coating baths. The aqueous, cathodic electrodepositable resin compositions comprise an acid-salted, cathodic electrodepositable resin composition, a crosslinking agent and a hydrophobic dye. The composition is curable, after electrodeposition in an aqueous, cathodic electrodeposition coating bath, to a hard, durable colored coating. Colored, cured electrodeposited coatings can now be produced without the need for conventional pigmenting agents. The coatings also have surprisingly improved gloss, better flow, low VOC and are non-settling.

Another aspect of the present invention is a coated article coated with at least one layer of a colored, aqueous, cathodic electrodeposited coating composition. The coating composition comprises an acid-salted, cathodic electrodepositable resin composition, a cross-linking agent, and a hydrophobic dye. The resulting coating is hard, durable and colored. The coatings also have, surprisingly, improved gloss, better flow, low VOC and are non-settling.

Yet another aspect of the present invention is a an aqueous, cathodic electrodeposition coating bath which is free of conventional pigmenting agents. The aqueous coating bath comprises an acid-salted cathodic, electrodepositable resin composition, a cross-linking agent and a hydrophobic dye. The coatings when deposited upon conductive substrates, are hard, durable and colored. The colored coatings can be produced from the bath without the need for a conventional pigment in either the coating or the coating bath. The coatings have, surprisingly, improved gloss, better flow, low VOC and are non-settling.

Yet another aspect of the present invention is a method of cathodic, electrodeposition wherein colored coatings are produced without the need for conventional pigments. The method comprises forming an aqueous coating bath from a cathodic, electrodepositable acid-salted, cathodic electrodepositable resin composition and a crosslinking agent, the bath being contained in an electrically insulated vessel containing an anode which is in contact with the bath. Them, an electrically conductive article, connected to an electric circuit to act as a cathode, is immersed in the coating bath and sufficient electrical power is applied across the article so that a sufficient coating of the resin-adduct composition and cross-linking agent is deposited upon the surfaces of the article. The article is then removed from the bath and the coating is cured to a hard, durable, colored film. A colored film is produced without the need for conventional colored pigment by including a hydrophobic dye in the resin composition. The resulting coating contains the hydrophobic dye and has, surprisingly, improved gloss, better flow, low VOC and is non-settling,

The foregoing, and other features and advantages of the present invention will become more apparent from the following description.

BEST MODE FOR CARRYING OUT THE INVENTION

The cationic, electrodepositable resin compositions, the aqueous cathodic electrodeposition coating baths, and the cathodic electrodepositable coatings of the present invention do not contain conventional color pigments. The resin compositions, coating baths and coating contain the hydrophobic dyes of the present invention. The hydrophobic dyes useful in the practice of the present invention will include those dyes which can be generically described as colored materials which dissolve in an organic matrix to make a continuous phase (solution) with no discrete phase separation.

The dyes which may be used in the base coats of the present invention include any 1:2 chrome or 1:2 cobalt metal organic complex dyes, examples of which are listed in Table 1.

The 1:2 chrome and 1:2 cobalt metal organic complex dyes are known in the art; for example, 1:2 chrome and 1:2 cobalt metal organic complex dyes are disclosed in U.S. Pat. No. 1,325,841. These dyes are produced by reacting or complexing chromium or cobalt with any organic moiety which will complex with the metal in solution, and the complexes are then neutralized and stabilized. Examples of such

## TABLE 1

| C.I. SOLVENT | DESCRIPTION |
|---|---|
| Yellow 88 | 1:2 Chromium complex of an organic molecule with methyl, hydroxyl, and carboxy groups; - neutralized with a branched aliphatic amine with 12 to 14 carbon atoms. |
| Yellow 89 | 1:2 Cobalt complex of an organic molecule with methyl, chloride, hydroxyl, and methylsulfonyl groups; stabilized with dehydroabiethylamine. |
| Yellow 25 | 1:2 Cobalt complex of an organic molecule with nitro, hydroxyl, and carboxy groups; neutralized with soda. |
| Orange 59 | 1:2 Cobalt complex of an organic molecule with nitro, hydroxyl, and carboxy groups; neutralized with soda. |
| Orange 11 | 1:2 Cobalt complex of an organic molecule with nitro, hydroxyl, and methyl groups; neutralized with sola and cyclohexylamine. |
| Red 9 | 1:2 Cobalt complex of an organic molecule with sulfamide and hydroxyl groups; stabilized with iso-propylamine. |
| Black 29 | 1:2 Chromium complex of an organic molecule with nitro, hydroxyl, and amyl groups; neutralized with soda. |
| Violet 24 | 1:2 Cobalt complex of an organic molecule with hydroxyl, chloride, and sulfomethylamide groups; stabilized with cyclohexylamine. |

organic moieties includes phenolic derivatives, pyraxalones, monoazo-, diazo-, naphthols, and imidazilone. Examples of conventional stabilizers include branched aliphatic amines with 12 to 14 carbon atoms, soda, isopropylamine, cylohexylamine, dehydroabietylamine.

Additional 1:2 chrome and 1:2 cobalt metal organic complex dyes which may be used in the practice of this invention include Solvent Yellow 82 (C.I. 18690), Solvent Red 118 (C.I. 15675), and Solvent Black 27 (C.I. 12195-12197) all of which are chromium complexes containing 1 atom of chromium to 2 molecules of organic moiety. These dyes are commercially available from BASF Wyandotte Corporation, Cincinnati, Ohio under the Zapon® trademark.

Examples of 1:2 cobalt metal organic complex dyes useful in the practice of the present invention include dyes disclosed in European patent application EP 113,643, filed on July 18, 1984 and German Offenlegungsschrift DE 3230102A1. Examples of 1:2 chrome metal organic complex dyes useful in the practice of this invention are also disclosed in U.S. Patent No. 4,340,536. Additional examples of commercially available 1:2 cobalt and 1:2 chrome metal organic complex dyes useful in the practice of this invention include Orasol® Yellow 2RLN (Solvent Yellow 98), Orasol® Yellow 3R (Solvent Yellow 25), Orasol® Orange G (Solvent Orange 11), Orasol® Orange RLN (Solvent Orange 59), Orasol® Red 2B (Solvent Red 9), Orasol® Violet RN (Solvent Violet 24), and Orasol® Black RL (Solvent Black 29). These dyes are manufactured under the Orasol® trademark, Ciba-Geigy, Greensboro, N.C. These dyes are disclosed in U.S. Patent No. 4,598,020.

The organic polyisocyanates used in the practice of this invention as cross-linking agents in the cationic electrodepositable resin compositions are typical of those used in art, e.g., U.S. Patent No. 4,182,831, the disclosure of which is incorporated by reference. The polyisocyanates will preferable be blocked with blocking agents.

Useful blocked polyisocyanates are those which are stable in the dispersion systems at ordinary room temperature and which react with the resinous product of this invention at elevated temperatures or are reactive when exposed to various types of radiation.

In the preparation of the blocked organic polyisocyanates, any suitable organic polyisocyanate can be used. Representative examples are the aliphatic compounds such as trimethylene, tetramethylene, pentamethylene, hexamethylene, 1,2-propylene, 1,2-butylene, and 1,3-butylene diisocyanates; 3-isocyanatomethyl-3,5,5-trimethylcyclohexylisocyanate; the aromatic compounds such as m-phenylene, p-phenylene, 4,4'-diphenyl, and 1,4-xylylene diisocyanates; the triisocyanates such as triphenyl methane-4,4'4'-triisocyanate, 1,3,5-benzene triisocyanate and 2,4,6-toluene triisocyanate; and the tetraisocyanates such as 4,4'-diphenyl-dimethyl methane-2,2',5,5'-tetraisocyanate; the polymerized polyisocyanates such as toluene diisocyanate dimers and trimers, polymethylene polyisocyanates having -N = C = O functionalities of 2 to 3, and the like.

In addition, the organic polyisocyanate can be a prepolymer derived from a polyol such as glycols, e.g. ethylene glycol and propylene glycol, as well as other polyols such as glycerol,trimethylolpropane, hexanetriol, pentaerythritol, and the like, as well a monoethers, such as diethylene glycol, tripropylene glycol and the like and polyethers, i.e., alkylene oxide condensates of the above.

Among the alkylene oxides that may be condensed with these polyols to form polyethers are ethylene oxide, propylene oxide, butylene oxide, styrene oxide and the like. These are generally called hydroxy-terminated polyethers and can be linear or branched. Especially useful polyether polyols are those derived from reacting polyols such as ethylene glycol, diethylene glycol, triethylene glycol, 1,4-butylene glycol, 1,3-butylene glycol, 1,6-hexanediol, and their mixtures; glycerol, trimethylolethane, trimethylolpropane, 1,2,6-hexanetriol, pentaerythritol, dipentaerythritol, tripentaerythritol, polypentaerythritol, sorbitol, methyl glucosides, sucrose and the like with alkylene oxides such as ethylene oxide, propylene oxide, their mixtures, and the like.

Particularly preferred polyisocyanates include the reaction product of toluene diisocyanate and trimethylolpropane and the isocyanurate of hexamethylene diisocyanate blocked with dibutyl amine.

The blocking agents used to block the polyisocyanates and polyisocyanate adducts are those known in the art. Any suitable aliphatic, cycloaliphatic, aromatic, alkyl monoalcohol and phenolic compound and secondary amino compound can be used as a blocking agent in the practice of the present invention, such as lower aliphatic alcohols, such as methyl, ethyl, chloroethyl, propyl, butyl, amyl, hexyl, heptyl, octyl, nonyl, 3,3,5-trimethylhexanol, decyl and lauryl alcohols, and the like; the aromatic-alkyl alcohols, such as phenylcarbinol, ethylene glycol monoethyl ether, monobutyl ether, monopropyl ether and the like; the phenolic compounds such as phenol itself, substituted phenols in which the substituents do not adversely affect the coating operations. Examples include cresol, nitrophenol, chlorophenol and t-butyl phenol.

A particularly preferred blocking agent is dibutyl amine. Additional blocking agents include tertiary hydroxyl amines, such as diethylethanolamine and oximes, such as methylethyl ketoxime, acetone oxime and cyclohexanone oxime, and caprolactam. A preferred oxime is methyl-*n*-amyl ketoxime.

The blocked polyisocyanates are formed by reacting sufficient quantities of blocking agent with sufficient quantities of organic polyisocyanates at a sufficient temperature for a sufficient amount of time under reaction conditions conventional in this art such that no free isocyanate groups are present when the reaction has run its course.

The aminoplast crosslinking agents useful in the practice of the present invention include: alkylated melamine-formaldehyde resins, including such melamine-formaldehyde resins which are characterized as being one of the following types: highly methylated, partially methylated and containing methylol functionality, methylated and containing imino functionality, highly butylated, partially butylated and containing methylol functionality, butylated and containing imino functionality, mixed methylated/butylated, mixed methylated/butylated containing methylol functionality, mixed methylated/butylated and containing imino functionality, or such other melamines as could be envisioned by exhaustive or partial etherification with an alcohol of the reaction product of 1-6 moles of formaldehyde for every mole of melamine. Examples of suitable melamine-formaldehyde resins which are commercially available include Cymel® 300, Cymel® 301, Cymel® 303, Cymel® 350, Cymel® 323, Cymel® 325, Cymel® 327, Cymel® 370, Cymel® 373, Cymel® 380, Cymel® 385, Cymel® 1116, Cymel® 1130, Cymel® 1133, Cymel® 1168, Cymel® 1156, Cymel® 1158, from the American Cyanamid Company and Resimene® 891, Resimene® 882, Resimene® 881, Resimene® 879, Resimene® 876, Resimene® 875, Resimene® 872, Resimene® 747, Resimene® 746, Resimene® 745, Resimene® 741, Resimene® 740, Resimene® 735, Resimene® 731, Resimene® 730, Resimene® 717, Resimene® 714, Resimene® 712, Resimene® 764, Resimene® 755, Resimene® 753, Resimene® 750, from the Monsanto Company. The aminoplast crosslinking agents that are useful in the practice of the present invention also include Benzoguanamine-formaldehyde resins which have been partially or fully etherified with a suitable alcohol, typically methanol or butanol or a mixture thereof, and which may also contain methylol functionality and/or imino functionality. An example of this type of crosslinking agent would include the commercial product Cymel® 1123 from the American Cyanamid Company.

The aminoplast crosslinking agents that are useful in the practice of this invention also include glycoluril-formaldehyde resins which have been partially or fully etherified with a suitable alcohol, typically methanol or butanol or a mixture thereof, and which may also contain methylol functionality and/or imino functionality. Examples of commercially available crosslinking agents of this type include Cymel® 1170, Cymel® 1171, and Cymel® 1172 from the American Cyanamid Company.

The aminoplast crosslinking agents that are useful in the practice of this invention also include urea-formaldehyde resins which have been partially or fully etherified with a suitable alcohol, typically methanol or butanol, and which may also contain methylol functionality and/or imino functionality. Examples of commercially available crosslinking agent of this type include Beetle® 55, Beetle® 60, Beetle® 65, and Beetle® 80 from the American Cyanamid Company and Resimene® 960, Resimene® 975, Resimene® 970, Resimene® 955, Resimene® 933, Resimene® 920, Resimene® 918, Resimene® 915, Resimene® 907, Resimene® 901, Resimene® 980, from the Monsanto Company.

The aminoplast crosslinking agents that are useful in the practice of this invention also include carboxyl modified aminoplast resin. These crosslinking agents would include melamine-formaldehyde, benzoguanamine-formaldehyde, glycoluriformaldehyde, and urea-formaldehyde type crosslinking agents that include carboxylic acid functionality as well as alkoxymethyl functionality, typically methoxymethyl, ethoxymethyl, and butoxymethyl, or a mixture thereof, and which may also contain methylol functionality and/or imino functionality. Examples of commercially available crosslinking agents of this type include Cymel® 1141 and Cymel® 1125 from the American Cyanamid Company.

The cathodic electrodepositable coating compositions of this invention which are made from epoxy resins which may optionally be chain-extended resulting in an increase in the molecular weight of the epoxy molecules by reacting with water miscible or water soluble polyols. The epoxy resins are reacted with amines to form epoxy-amine resin adducts to form cathodic, electrodepositable coating compositions.

The epoxides (epoxy resins) useful in the practice of this invention are the polyepoxides typically used in this art and comprise a resinous material containing at least one epoxy group per molecule.

A particularly useful class of polyepoxides are the glycidyl polyethers of polyhydric phenols.

Such polyepoxide resins are derived from an epihalohydrin and a dihydric phenol and have an epoxide equivalent weight of about 400 to about 4,000. Examples of epihalohydrins are epichlorohydrin, epibromohydrin and epiiodohydrin with epichlorohydrin being preferred. Dihydric phenols are exemplified by resorcinol, hydroquinone, p,p'-dihydroxydiphenyl-propane (or bisphenol A as it is commonly called), p,p'-dihydroxybenzophenone, p, p'-dihydroxy-diphenyl ethane, *bis*-(2-hydroxynaphthy) methane, 1,5-dihydroxydiphenyl and the like with bisphenol A being preferred. These polyepoxide resins are well known in the art and are made in desired molecular weights by reacting the epihalohydrin and dihydric phenol in various ratios or by reacting a dihydric phenol with a lower molecular weight polyepoxide resin. Particularly preferred polyepoxide resins are glycidyl polyethers of bisphenol A having epoxide equivalent weights of about 450 to about 2,000 more typically about 800 to about 1,600 and preferably about 800 to about 1,500.

The polyepoxides used in the practice of this invention will have a relatively high molecular weight, that is, the more typically about 1,600 to about 3,200, and preferably about 1,600 to about 2,800.

Another quite useful class of polyepoxides are produced similarly from novolak resins or similar polyphenol resins.

Also suitable are the polyepoxides comprising similar polyglycidyl ethers of polyhydric alcohols which may be derived from such polyhydric alcohols as ethylene glycol, diethylene glycol, triethylene glycol, 1,2-propylene glycol, 1,4-propylene glycol, 1,5-pentanediol, 1,2,6-hexanetriol, glycerol, bis (4-hydroxycyclohexyl) 2,2-propane and the like. There can also be used polyglycidyl esters of polycarboxylic acids, which are produced by the reaction of epichlorohydrin or similar epoxy compounds with an aliphatic or aromatic polycarboxylic acid, dimerized linolenic acid and the like. Examples are glycidyl adipate and glycidyl phthalate. Also useful are polyepoxides derived from the epoxidation of an olefinically unsaturated alicyclic compound. Included are diepoxides comprising in part one or more monoepoxides. These

7

EP 0 448 747 A1

polyepoxides are nonphenolic and are obtained by the epoxidation of alicyclic olefins. For example, by oxygen and selected method catalysts, by perbenzoic acids, by acetaldehyde monoperacetate, or by peracetic acid. among such polyepoxides are the epoxy alicyclic ethers and in other epoxy-containing compounds and resins include nitrogenous diepoxides such as disclosed in U.S. Patent No. 3,365;471; epoxy resins from 1,1-methylene *bis*-(5-substituted hydantoin), U.S. patent No. 3,391,097; *bis*-imide containing diepoxides, U.S. Patent No. 3,450,711; epoxylated aminomethyl-diphenyl oxides, U.S. Patent No. 3,312,664; heterocyclic N.N'-diglycidyl compounds, U.S. Patent No. 3,503,979; amino epoxy phosphonates, British Patent No. 1,172,916; 1,3,5-triglycidyl isocyanurates, as well as other epoxy-containing materials known in the art.

Any cationic, electrodepositable amine-epoxy resin adducts useful in the cathodic electrodeposition art can be used in the practice of the present invention as well as any equivalent adducts. In addition, modified epoxy resins may be used. Specifically, the modified epoxy resins used in the practice of this invention may comprise one of the aforementioned epoxy resin compositions chain extended with water miscible or water soluble polyol, reacted with excess amine, and finally reacted with a fatty acid or aliphatic monoepoxide. These epoxy amine resin adduct compositions are disclosures of which are incorporated by reference. However, as previously mentioned, epoxy-amine resin adducts produces by any methods, including the diketimine method as disclosed in U.S. Patent No. 3,947,339, may be used in the practice of the present invention.

The amine functional acrylic copolymers useful cathodic electrodepositable resin compositions in the practice of the present invention include copolymers containing the following monomers: dimethylaminoethylmethacrylate, 2-hydroxyethyl acrylate, styrene and butyl acrylates.

Cathodic, electrodepositable, amine functional acrylic compositions are disclosed in U.S. Patent No. 3,883,483 which is incorporated by reference.

Sufficient quantities of cross-linking agents are incorporated into the electrodepositable coating compositions of this invention such that the deposited coating will be completely cured upon baking and, when using isocyanate cross-linking agents there will be virtually no free isocyanate groups remaining.

When polyisocyanate cross-linking agents are used, typically, about 10 wt.% to about 60 wt.% of blocked polyisocyanate is incorporated based upon the total weight of epoxy-amine resin adduct composition and cross-linking agent, more typically about 20 wt.% to about 50 wt.%, preferably about 25 wt.% to about 35 wt.%.

When using aminoplast crosslinking agents, typically about 10 wt.% to about 60 wt.% of the aminoplast crosslinking agent incorporated into the coating composition based upon the weight of the principal resin and crosslinking agent, more typically about 20 wt.% to about 40 wt.%.

The crosslinking agents of this invention are typically mixed with the electrodepositable resin compositions by adding the cross-linking agents to a vessel containing the resin compositions and mixing the charge for a sufficient period of time, for example, about one-half hour.

In order to solubilize or disperse into an emulsion electrodepositable resin composition, it is necessary to salt the composition product with a water soluble acid. The acids which can be used include those known in that art such as formic acid, acetic acid, phosphoric acid, lactic acid, hydrochloric acid, etc. Sufficient quantities of the acid are mixed with said amine-epoxy resin adduct compositions to solubilize or disperse the resin in water. One method, which is referred, in which the salting process is accomplished is by charging the resin composition, an acid, cosolvents, water and surfactants conventional in the art into a vessel, and mixing the charge with a slow speed mixer.

Typically, about 0.1 Meq to about 0.8 Meq of acid is used per gram of solid resin, more typically about 0.2 Meq to about 0.7 Meq, and preferably about 0.2 Meq to about 0.5 Meq. Once again, it will be appreciated by those skilled in the art that reactant quantities and reaction parameters will according to the nature of the components, process equipment, and the like.

The electrodepositable cathodic coating compositions of this invention are used in an electrodeposition process as an aqueous dispersion. Sufficient quantities of the resin compositions are used, depending upon the particular application parameters, so that the concentrations of the resin compositions in aqueous baths will produce a coatings on article of sufficient thicknesses so that, upon baking, the coatings will have desired characteristics such as a smooth surface and durability.

The concentration of cathodic, electrodepositable principal resin coating compositions in an aqueous coating bath is typically about 5 wt% to about 50.0 wt.%, more typically about 10.0 wt.% to about 25.0 wt.%, preferably about 15.0 wt.%, although this will vary with the coating process and coating system used.

It should be noted that the cathodic electrodepositable resin coating compositions are typically shipped by the manufacturer to the user as a salted, aqueous dispersion having a typical concentration of about 20 wt.% to about 36 wt.% of solids, although any concentration is available.

8

The cathodic electrodepositable coating baths of this invention are typically formed by mixing concentrates of the solubilized (i.e., salted) cathodic electrodepositable resin compositions of this invention with water, although unsalted resin compositions could be used in baths already containing the solubilizing acid. The electrodeposition bath may contain additional ingredients such as cosolvents, antioxidants, catalysts surfactants, anti-corrosives etc., which are typically used in electrodeposition processes known in the art.

Sufficient quantities of the hydrophobic dyes of the present invention are included in the cathodic electrodepositable resin compositions to produce the appearance characteristics desired such as gloss, reflectance, hue, tint and other desired characteristics. Typically, the amount of dye used is expressed as the weight percentage of total coating bath solids. Typically the dye weight percentage of total coating bath solids. Typically the dye weight percentage of total bath solids is about 0.5 wt.% to about 5.0 wt.% in the electrodepositable resin compositions of the present invention, more typically about 1.0 wt.% to about 4.0 wt.% preferably about 1.0 wt.% to about 1.5 wt.%.

Pigment in conventional cathodic electrocoat processes is typically added to the electrodeposition bath in paste form, i.e., predispersed in a composition comprising pigment, cationic, electrodepositable grind resin composition, and surfactants. However, using the hydrophobic dyes of the present invention, it is no longer necessary to use color pigment pastes.

The dye will be blended directly into the cathodic resin compositions of the present invention using conventional blending or mixing means prior to the acid-salting or solubilization step. i.e., prior to the aqueous solubilization of the resin composition. After the sufficient amount of dye have been incorporated into the cathodic resin composition, it is then acid-salted.

The use of the hydrophobic dyes in the coatings and processes of the present invention eliminates the need for color pigments and thereby results in several advantages. Eliminating pigment from the E-Coat coatings and processes improves the efficiency of the coating process since pigment-settling is also eliminated. The cumbersome, complex Pigment to Binder (P/B) monitoring and testing, which must now be done with conventional pigment-containing cathodic electrocoat baths can now be eliminated with the pigment-free electrocoats of the present invention. In addition, the use of hydrophobic dyes results in aqueous coating baths having a reduced VOC. The reduced VOC is attributable to the elimination of conventional pigment pastes from the coating bath. Pigment must be introduced into an aqueous coating bath in a paste form consisting of grind resin, solvents and dry pigment. The elimination of conventional pigment paste from a bath results, accordingly, in the elimination of those organic solvents typically contained in a grind resin, such as butyl cellosolve, hexyl cellosolve, polypropylated phenol oxide, ethyl cellosolve, methyl cellosolve, methyl isobutyl ketone, and the like. Another advantage of the coating systems of the present invention is that it is now possible to have a one component system rather than the two-component systems which are used in conventional pigment-containing electrocoats. The two-component systems typically consist of a principal emulsion and a pigment paste.

The elimination of pigment paste from a conventional E-Coat bath will result in a significant reduction of the VOC of the coating bath. The reduction and elimination of VOC from cathodio electrocoat coating baths is being mandated by federal, state and local environmental laws.

The electrodeposition baths may contain coupling solvents which are water soluble or partially water soluble organic solvents for the resinous vehicles used in the practice of this invention. The coupling solvents or cosolvents used in the practice of this invention are those typically used and known in the art. The coupling solvents or cosolvents used in the practice of this invention are those typically used and known in the art. The coatings, coating baths and processes of the present invention significantly lower the need for cosolvents thereby reducing the coating bath VOC. The presence of pigment reduces the flow of a coating. In order to improve flow, cosolvents are used as additives. The pigment-free coating compositions of the present invention have improved flow and therefore, the need for cosolvents is reduced or eliminated. The elimination of cosolvents further reduces the VOC of the coating bath.

The smoothness of the cured coating is a function of the "flow" of the deposited coating composition. Flow is defined as the tendency of the electrodeposited coating composition to liquify during the curing operation and form a smooth cohesive film over the surface of a coated article prior to the onset cross-linking.

The electrodeposition process typically takes place in an electrically insulated tank containing an electrically conductive anode which is attached to a power source such as a direct current source. The size of the tank will depend on the size of the article which is to be coated. Typically, the tank is constructed of stainless steel or mild steel lined with a dielectric coating such as epoxy impregnated fiberglass or polypropylene. The electrodepositable, cathodic resinous coating compositions of this invention are typically used to coat conductive articles such as automobile or truck bodies and body parts. The typical size of an electrodeposition bath tank used for this purpose can range from about 100-200 gallons (378-756 liters) to

9

about 120,000 gallons (454,250 liters). However, articles of any size, ranging from fasteners to off-road construction equipment or structural members, may be coated with these composition.

To initiate the process, typically, the article is connected to a direct current circuit (either before or after immersion in the bath), so that the article acts as the cathode. When the article is immersed in the coating bath, an electrical power flow across the article results in the dispersed cationic electrodepositable coating composition being deposited on the surfaces of the article. The dispersed resin composition is positively charged and therefore attracted to the negative cathodic surfaces of the article. The thickness of coating deposited upon the article during its residence in the aqueous cathodic coating bath is a function of coating parameters known i n this art, such as the chemical composition of the cathodic electrodepositable resin composition, the voltage across the article, the current flux, the pH of the coating bath, the conductivity, the residence time, etc. Sufficient voltage will be applied to the article for a sufficient time to obtain a coating of sufficient thickness.

Typically, the voltage applied across the article is about 50 volts to about 500 volts, more typically about 200 to about 350 volts, and preferably about 225 volts to about 300 volts. The current density is typically about 0.5 ampere per sq. ft. to about 30 amperes per sq. ft., more typically about one ampere per sq. ft. The articles typically remains in the coating bath for a sufficient period of time to produce a coating or film of sufficient thickness, having sufficient flexibility and having sufficient resistance to corrosion. The residence time or holding time is typically about 1-2 second to about 5 minutes, more typically about 1 minute to about 2-1/2 minutes, and preferably about 2 minutes.

The pH of the coating bath is sufficient to produce a coating which will not rupture under the applied voltage. That is, sufficient pH to maintain the stability of the coating bath so that the resin does not kick-out of the dispersed state and to control the conductivity of the bath. Typically, the pH is about 4 to about 7 more typically about 5 to about 6.8, and preferably about 5.5 to about 6.5.

The conductivity of the coating bath will be sufficient to produce a coated film of sufficient thickness. Typically the conductivity will be about 800 micromhos to about 3,000 micromhos, more typically about 800 micromhos to about 2,200 micromhos, and preferably about 900 micromhos to about 1,800 micromhos.

The desirable coating thicknesses are sufficient to provide resistance to corrosion while having adequate flexibility. Typically, the film thicknesses of the coated objects of this invention will be about 0.4 mil (0.001 cm) to about 1.8 mils (0.005 cm), although thicker or thinner films may be deposited as required.

When the desired thickness of the coating has been deposited, the article is removed from the electrodeposition bath and cured. Typically, the electrodeposited coatings are cured in a conventional convection oven at a sufficient temperature for a sufficient length of time to unblock the blocked cross-linking agents, if blocking agents are used, and allow for the cross-linking agents, if blocking agents are used, and allow for the cross-linking of the electrodepositable resin compositions. Typically, the coated articles will be baked at a metal temperature of about 300°F (149°C) to about 600°F (315°C), more typically about 250°F (121°C) to about 390°F (199°C), and preferably about 300°F (149°C) to about 375°F (191°C). The coated articles will be baked for a time period of about 10 minutes to about 40 minutes, more typically about 10 minutes to about 35 minutes, and preferably about 15 minutes to about 30 minutes.

It will be appreciated by one skilled in the art that all coating and baking parameters may vary in accordance with such factors as the particular coating composition employed, process equipment, coating performance requirements, and the like.

It is contemplated that the coated articles of the present invention may also be cured by using radiation, vapor curing, contact with heat transfer fluids, and equivalent methods.

Typically the coated articles of this invention will comprise electrically conductive substrate having a conductivity similar to the aforementioned metals may be used. The uncoated articles may comprise any shape so long as all surfaces can be wetted by the electrodeposition bath.

The coatings of the coated articles of this invention exhibit superior smoothness, gloss, flexibility, durability and resistance to corrosion. Smoothness and gloss are related to the flow of the electrodeposited cathodic resin. Durability, flexibility and resistance to corrosion are related to the chemical nature of the electrodeposited cathodic resin composition as well as the smoothness of the deposited coating. These coating compositions readily accept an automotive primer overcoat. The coatings of the present invention have, surprisingly and unexpectedly, color and tint and hiding without the need for pigment. This is attributable to the use of hydrophobic dyes in place of pigments. The coatings also exhibit surprising and unexpected improvements in gloss and distinctness of image.

It should be noted that the articles which are coated by the coating compositions of this invention are typically automobile bodies which have been pretreated to remove impurities and contaminants in a treatment bath such as a phosphatizing bath. However, the coating compositions may be used to coat virtually any article comprising a electrically conductive substrate, with or without pretreatment of the surfaces of the article. This includes appliances, truck bodies, vehicle parts, structural members, etc.

The following examples are illustrative of the principles and practice of this invention, although not limited thereto. Parts and percentages where used and parts and percentages by weight.

REPRESENTATIVE EXAMPLES OF TYPICAL POLYMERIC MATERIALS USEFUL IN THIS INVENTION

EXAMPLE 1

Ethyl cellosolve (290.0 parts by weight) and 106.0 parts of butyl cellosolve are charged into a reactor equipped with condenser, stirrer, thermometer, and dropping funnel. This mixture is heated to 120°-130° C and held at this temperature. To this mixture is added over a period of 3 hours, a mixture of 580.0 parts butyl acrylate, 350.0 parts styrene, 140.0 parts N,N-dimethylaminoethyl methacrylate, 58.0 parts 2-hydroxyethyl methacrylate, and 17.0 parts α,α-azobisisobutyronitrile. A mixture of 2.0 parts t-butyl peroxyisopropyl carbonate and 1.5 parts ethyl cellosolve is then added. The reaction is held at 120° C for 1 hour, after which a second addition of said components is added and, likewise, the reaction is permitted to continue for 1 hours, after which a third and final addition of said components is added and the reaction is permitted to continue for 2 hours.

EXAMPLE 2

A reaction vessel is charged with 727.6 parts Epon$^R$ 829, 268.1 parts PCP-0200, and 36.1 parts xylene and heated with a nitrogen sparge to 210° C. The reaction is held at reflux for about 1/2 hour to remove water. The reaction mixture is cooled to 150° C and 197.8 parts bisphenol A and 1.6 parts benzyldimethylamine catalyst are added and the reaction mixture heated to 150°-190° C and held at this temperature for about 1 1/2 hours and then cooled to 130° C. Then 2.2 parts of the benzyldimethylamine catalyst are added and the reaction mixture held at 130° C for 2 1/2 hours until a reduced Gardner-Holt viscosity (50 percent resin solids solution in 2-ethoxyethanol) of P is obtained. Then 73.1 parts of a diketimine derivative derived from diethylenetriamine and methyl isobutyl ketone (73 percent solids in methyl isobutyl ketone), and 39.1 parts N-methylethanolamine are added and the temperature of the reaction mixture is brought to 110° C and held at this temperature for 1 hour. To this mixture, 76.5 parts 2-hexoxyethanol are added.

EXAMPLE 3

To a clean, dry reactor, 115 parts xylene are added. The mixing liquid is blanketed with pure nitrogen and heated to 42° C. An addition of 568.1 parts of Epon® 1001F (EEW = 520 - 540) is made at such a rate that the batch temperature never drops below 60° C, usually over a period of two hours. Heating is continued until 100° C. At this point, 75.9 parts dodecyl phenol are added and heated to 118° C. Vacuum drying by distillation of xylene is started at this temperature and continued while heating to 125° C. The pressure should be between 65 cm and 69 cm Hg (88 kP - 92 kP) at full vacuum. The drying stage should take between 1.0 and 1.5 hours. Break vacuum with pure nitrogen only. The batch is cooled (the sample at this point should contain 94.3-95.3 % non-volatiles), and at 115° C, 1.1 parts benzyldimethylamine are added. The peak exotherm temperature should reach 129°-132° C. The temperature is maintained at 128°-132° C and the polymerization is followed by EEW (epoxy equivalent weight) titration. Every 30 minutes the reaction is sampled and is stopped at an end point of 1090 -1110 EEW. The typical reaction time is three hours. Adjustments to the catalyst level may be necessary if extension period deviates more than 30 minutes from three hours. At the target EEW, 12.1 parts butyl Cellosolve and 74.7 parts xylene are added followed by 42.6 parts DEOA (diethanolamine). The temperature of this reaction should not exceed 132° C. Cooling may be necessary at this point with jacket or coils. A vacuum suction is started immediately after the DEOA addition and pressure is reduced to 18 inches of Hg and held for 5 minutes. The pressure is further reduced in 2 inch Hg increments followed by short holding period until 26-27 inches of Hg is achieved. The batch is then cooled to 90° C in one hour following addition of DEOA. To achieve this, a good reflux rate should be attained in 20-25 minutes after the DEOA addition. All solvents are returned to the reactor. After one hour of vacuum cooling (T = 90° C), 40.6 parts ethylene glycol monohexyl ether and 107.7 parts isobutanol are added without breaking vacuum. The batch is cooled for 35 minutes to 57°-61° C under full vacuum to achieve the target temperatures during the specified time tables. After the 35 minute cooling period, 13.3 parts of dimethylamino propylamine (DMAPA) are charged as fast as possible. The batch is kept between 54°-60°C for two hours after the exotherm. Then it is heated to 90° C over one hour and this temperature is held for one hour. The batch is then cooled to 80°C.

EXAMPLE 4

To a suitable reactor 1881.7 parts of triethylene tetramine are added. Heat and agitation are applied and, at 104°C, 1944.8 parts of an epoxide resin solution at 59.4% solids in ethylene glycol monomethyl ether (the epoxide resin being glycidyl polyether of bisphenol A having an epoxide equivalent weight of 895) are slowly added. The epoxide resin addition is completed in 65 minutes and the temperature drops to 99°C. The temperature is slowly raised to 121°C over 45 minutes and is held between 121°-127°C for 1 hour to complete the adducting reaction. The excess unreacted amine and the solvent is removed by heating the adduct solution to 232°C under vacuum (25 mm Hg pressure). When the distillation is completed, vacuum is released and the temperature is reduced to 182°C. This is followed by the addition of 700 parts of ethylene glycol monomethyl ether, which reduces the temperature to about 118°C. When the solution is homogeneous, 458.3 parts of the glycidyl ether of mixed fatty alcohols containing predominantly n-octyl and n-decyl groups, the glycidyl ether having an epoxide equivalent weight of 229 are added at a temperature of 107°-116° C. Heating is stopped after an additional hour at 116°C. The resulting product should have a solids content of 71.3 %, and a Gardner-Holt viscosity of Z6 -Z7.

EXAMPLE 5

A blocked isocyanate (polyurethane cross-linking agent, reverse order) is prepared according to the following procedure. Slowly and with stirring in a nitrogen atmosphere, 291 parts of an 80/20 isomeric mixture of 2,4-/2,6-toluene diisocyanate, 0.08 parts of dibutyltin dilaurate and 180 parts of methyl isobutyl ketone are charged to a suitable reactor, the temperature being maintained below 38°C. The mixture is maintained at 38°C. for a further half hour after which 75 parts of trimethylolpropane are added. After allowing the reaction to proceed for about 10 hours, 175 parts of ethylene glycol monopropyl ether are added and the mixture reaction kept 1.5 hours at 121°C until essentially all the isocyanate groups are reacted. This depletion is recognized from the infrared spectrum.

The normal order blocked isocyanate can be prepared by the altering of the foregoing order of addition pursuant to Example 1 of German Offenlegungsschrift 2,701,002.

EXAMPLE 6

A blocked is isocyanate crosslinker (polyurea) is prepared according to the following procedure. To a dry reactor, 483 parts of triisocyanurated hexamethylenediisocyanate and 193 parts of 2-hexanone are charged. Dibutylamine (307 parts) is added slowly and with stirring under nitrogen atmosphere so that the temperature does not exceed 80°C. After all amine has reacted, 14 parts of n-butanol and 0.2 parts of dibutyl tin dilaurate are added.

EXAMPLES OF THE INCORPORATION OF HYDROPHOBIC DYES IN PRINCIPAL RESIN SOLUTIONS

EXAMPLE 7 - 12

This general procedure applies to the examples in Table 2, which contain the specific formulations. All amounts in Table 2 represent the weight of the non-volatile portion.

A suitable mixing vessel is charged with the crosslinker, and the dye with slow stirring. This mixture is stirred for about 30 minutes or until homogeneous. Plasticizer and organic solvents are then added to the mixture, containing the agitation. Principal resin, at 21°-49° C., is then added to the continuously mixing batch. After 30 minutes of continually mixing, a water insoluble organo-lead compound(s) or a liquid tin catalyst is added. The mixing is continued uninterrupted for 30 minutes, then all remaining additives, flow agents, solvent, antifoam agent, and surfactants are added as required.

## TABLE 2

| INGREDIENTS | EXAMPLES | | | | | |
|---|---|---|---|---|---|---|
| | 7 | 8 | 9 | 10 | 11 | 12 |
| Crosslinker (Example 5) | 30.5 | 30.5 | 15.0 | 14.0 | 30.5 | |
| Crosslinker (Example 6) | | | 15.0 | 14.0 | 31.0 | |
| Paraplex WP-1® Rohm & Haas | 7.6 | 7.6 | 7.6 | | 7.6 | 7.6 |
| Orasol RL® Black dye | 1.2 | 1.2 | | 1.2 | | |

(Table 2 continued)

| | 7 | 8 | 9 | 10 | 11 | 12 |
|---|---|---|---|---|---|---|
| Zapon® Black X51 | | | 1.2 | | 1.2 | |
| Zapon® Red 471 | | | | | | 2.5 |
| Prin. Resin (Example 1) | | | | 67.0 | | |
| Prin. Resin (Example 2) | | | | | 55.0 | |
| Prin. Resin (Example 3) | 56.6 | 56.6 | 57.0 | | | |
| Prin. Resin (Example 4) | | | | | | 57.7 |
| Dibutyltin dilaurate | 1.8 | | | | | |
| Lead (II) 2-Ethyl hexanoate | | 1.8 | 1.8 | 1.8 | | 1.8 |
| Lead naphthenate | | | | | 3.2 | |
| Flow additive | 2.3 | 2.3 | 2.3 | | 2.3 | 2.3 |

EXAMPLE 13-19

13

This general procedure applies to the Examples found in Table 3, which contain the specific formulations. All amounts in Table 3 represent the parts by weight of the ingredient.

First, principal resin solutions containing the crosslinker, plasticizer, the hydrophobic dye, the catalyst, and other applicable ingredients are mixed together as described in the previous set of examples (7-12). A solubilizing acid is then added to the principal resin solution, and then the resultant solubilized principal resin solution is then mixed with deionized water, or, optionally, with a deionized water/surfactant mixture.

**TABLE 3**

| INGREDIENTS | EXAMPLES | | | | | | |
|---|---|---|---|---|---|---|---|
| | 13 | 14 | 15 | 16 | 17 | 18 | 19 |
| Example 7 (74%) | 269.7 | | | | | | |
| Example 8 (74%) | | 269.7 | | | | | |
| Example 9 (74%) | | | 269.7 | 269.7 | | | |
| Example 10 (74%) | | | | | 269.7 | | |
| Example 11 (74%) | | | | | | 269.7 | |
| Example 12 (74%) | | | | | | | 269.7 |
| Acetic acid (Glacial) | 2.53 | 2.53 | 2.53 | | 3.31 | 3.19 | 2.53 |
| Lactic acid (85%) | | | | 4.46 | | | |
| Deionized water | 298.0 | 298.0 | 298.0 | 296.1 | 297.2 | 291.3 | 298.0 |

EXAMPLES OF CATHODIC PAINTS CONTAINING HYDROPHOBIC DYES

EXAMPLES 20 - 26 are prepared according to the formulations shown in Table 4.

**TABLE 4**

| INGREDIENTS | EXAMPLES | | | | | | |
|---|---|---|---|---|---|---|---|
| | 20 | 21 | 22 | 23 | 24 | 25 | 26 |
| Example 13 | 571.4 | | | | | | |
| Example 14 | | 571.4 | | | | | |
| Example 15 | | | 571.4 | | | | |

(Table 4 continued)

| | 20 | 21 | 22 | 23 | 24 | 25 | 26 |
|---|---|---|---|---|---|---|---|
| Example 16 | | | | 571.4 | | | |
| Example 17 | | | | | 571.4 | | |
| Example 18 | | | | | | 571.4 | |
| Example 19 | | | | | | | 571.4 |
| Deionized water | 428.6 | 428.6 | 428.6 | 428.6 | 428.6 | 428.6 | 428.6 |
| TOTAL | 1000 | 1000 | 1000 | 1000 | 1000 | 1000 | 1000 |

The E-Coat coating composition and coating baths of the present invention are free of conventional pigmenting agents while having the desirable color and appearance characteristics. The use of hydrophobic dyes surprisingly and unexpectedly results in electrodeposited cathodic coatings having color without the need for pigments. The elimination of conventional pigments eliminates the pigment settling and fouling of process equipment, and reduces the VOC of the coating bath. In addition the burdensome monitoring of the P/B ratio of the coating bath is eliminated. Grind resins are eliminated from coating baths, and, the costly and energy intensive grinding process required to produce pigment pastes is also eliminated. The coatings of the present invention also exhibit, surprisingly and unexpectedly, improved gloss, and flow.

Although this invention has been shown and described with respect to the detailed embodiments thereof, it will be understood by those skilled in the art that various changes in form and detail thereof may be made without departing from the spirit and scope of the claimed invention.

## Claims

1. A cathodic electrodepositable resinous coating composition comprising
   an acid-salted, electrodepositable resin composition;
   a cross linking agent; and,
   a hydrophobic dye
   the composition being curable, after electrodeposition in an aqueous, cathodic electrodeposition coating bath, to a hard, durable, colored film having high gloss and improved flow.

2. A coating composition according to claim 1, characterized by the fact that the resin composition is selected from the group consisting of epoxy-amine resin adducts and amine functional acrylic copolymer resins.

15

3. A coating composition according to claim 1 or 2, characterized by the fact that the crosslinking agent is selected from the group consisting of blocked polyisocyanates, blocked polyisocyanurates, and aminoplast resins.

4. A coating composition according to any one of claims 1 to 3, characterized by the fact that the dye is a metal organic complex dye selected from the group consisting of 1:2 cobalt metal organic complex dyes and 1:2 chrome metal organic complex dyes.

5. A coating composition according to any one of claims 1 to 3, characterized by the fact that the dye is selected from the group consisting of C.I. Solvent Yellow 88, C.I. Solvent Yellow 89, C.I. Solvent Yellow 25, C.I. Solvent Orange 11, C.I. Solvent Orange 59, C.I. Solvent Red 7, C.I. Solvent Violet 24 and C.I. Solvent Black 29.

6. A cathodic electrodeposition coating composition according to any one of claims 1 to 5, characterized by the fact that it is in the form of an aqueous bath.

7. A coated article characterized by the fact that it is coated with at least one layer of an aqueous, cathodic electrodeposited coating composition according to any one of the preceding claims.

8. A method of cathodic electrodeposition characterized by forming an aqueous coating bath from a cathodic, electrodepositable resin composition according to any one of claims 1 to 6, the bath being contained in an electrically insulated vessel containing an anode in contact with the bath, then connecting an electrically conductive article to an electric circuit to act as a cathode, and immersing the article in the coating bath, then applying sufficient electrical power across the article so that a sufficient coating or the resin composition and cross-linking agent is deposited upon the surfaces of the article, and removing the article from the bath and then curing the coating to a hard, durable film.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| E | EP-A-0 380 790 (BASF CORP.)(08-08-1990) --- | 1-8 | C 09 D 5/44 |
| X | PATENT ABSTRACTS OF JAPAN, vol. 9, no. 205 (C-299)[1928], 22nd August 1985; & JP-A-60 70 200 (SHIMIZU SHOJI) 20-04-1985 --- | 1,4,7,8 | |
| A | EP-A-0 162 640 (ALBRIGHT & WILSON) * Claims 1,2,6,12-15 * & US-A-4 655 787 (Cat. D) --- | | |
| X | GB-A-2 155 023 (SEIKO INSTRUMENTS & ELECTRONICS) * Abstract; page 2, lines 36-39,47-49; page 3, lines 18-19; page 4, example 1 * ----- | 1,2,6-8 | |

| | | | TECHNICAL FIELDS SEARCHED (Int. Cl.5) |
|---|---|---|---|
| | | | C 09 D |

The present search report has been drawn up for all claims

| Place of search | Date of completion of the search | Examiner |
|---|---|---|
| THE HAGUE | 30-11-1990 | GIRARD Y.A. |

EPO FORM 1503 03.82 (P0401)